(19) Europäisches Patentamt
European Patent Office
Office européen des brevets

(11) **EP 4 577 953 B1**

(12) **EUROPEAN PATENT SPECIFICATION**

(45) Date of publication and mention
of the grant of the patent:
**03.06.2026 Bulletin 2026/23**

(21) Application number: **23768764.5**

(22) Date of filing: **22.08.2023**

(51) International Patent Classification (IPC):
*G06N 3/09* (2023.01)   *G06N 3/047* (2023.01)
*G06N 3/049* (2023.01)

(52) Cooperative Patent Classification (CPC):
**G06N 3/047; G06N 3/049; G06N 3/09**

(86) International application number:
**PCT/US2023/072648**

(87) International publication number:
**WO 2024/044586 (29.02.2024 Gazette 2024/09)**

(54) **METHODS, DEVICES AND SYSTEMS FOR IMPLEMENTING PINNED-STATE CONNECTIONIST SEQUENTIAL CLASSIFICATION**

VERFAHREN, VORRICHTUNGEN UND SYSTEME ZUR IMPLEMENTIERUNG EINER FESTZUSTANDS-VERBINDUNGSELEMENT SEQUENTIELLEN KLASSIFIZIERUNG

PROCÉDÉS, DISPOSITIFS ET SYSTÈMES POUR METTRE EN OEUVRE UNE CLASSIFICATION SÉQUENTIELLE DE CONNEXION À L'ÉTAT IMMOBILISÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **25.08.2022 US 202263401042 P**
**12.07.2023 US 202363513294 P**

(43) Date of publication of application:
**02.07.2025 Bulletin 2025/27**

(73) Proprietor: **Dolby Laboratories Licensing Corporation**
**San Francisco, CA 94103 (US)**

(72) Inventors:
• **MA, Jianbo**
**San Francisco, California 94103 (US)**
• **NOSRATI, Hadis**
**San Francisco, California 94103 (US)**

(74) Representative: **Dolby International AB**
**Patent Group Europe**
**77 Sir John Rogerson's Quay**
**Block C**
**Grand Canal Docklands**
**Dublin, D02 VK60 (IE)**

(56) References cited:
• **GAKUTO KURATA ET AL: "Guiding CTC Posterior Spike Timings for Improved Posterior Fusion and Knowledge Distillation", ARXIV.ORG, CORNELL UNIVERSITY LIBRARY, 201 OLIN LIBRARY CORNELL UNIVERSITY ITHACA, NY 14853, 17 April 2019 (2019-04-17), XP081387512**
• **HAO TANG ET AL: "End-to-End Neural Segmental Models for Speech Recognition", ARXIV.ORG, CORNELL UNIVERSITY LIBRARY, 201 OLIN LIBRARY CORNELL UNIVERSITY ITHACA, NY 14853, 1 August 2017 (2017-08-01), XP081290249, DOI: 10.1109/JSTSP.2017.2752462**
• **YU CHENGZHU ET AL: "A multistage training framework for acoustic-to-word model", INTERSPEECH 2018, 2 September 2018 (2018-09-02), pages 786 - 790, XP093103892, Retrieved from the Internet <URL:https://www. isca-speech.org/archive/pdfs/interspeech_2018/ yu18_interspeech.pdf> DOI: 10.21437/ Interspeech.2018-1452**
• **H. LI, W. WANG: "Reinterpreting CTC training as iterative fitting", ARXIV.ORG, CORNELL UNIVERSITY LIBRARY, 201 OLIN LIBRARY CORNELL UNIVERSITY ITHACA, NY 14853, 7 July 2020 (2020-07-07), XP081702865, DOI: 10.48550/arXiv.1904.10619**

EP 4 577 953 B1

- H. LIU ET AL: "Connectionist temporal classification with maximum entropy regularization", PROCEEDINGS OF THE 32ND INTERNATIONAL CONFERENCE ON NEURAL INFORMATION PROCESSING SYSTEMS (NEURIPS'18), 3 December 2018 (2018-12-03), pages 839 - 849, XP055731719, ISBN: 9781510884472

- E. VARIANI ET AL: "Sampled connectionist temporal classification", PROCEEDINGS OF THE 2018 IEEE INTERNATIONAL CONFERENCE ON ACOUSTICS, SPEECH AND SIGNAL PROCESSING (ICASSP'18), 15 April 2018 (2018-04-15), pages 4959 - 4963, XP033401252, DOI: 10.1109/ICASSP.2018.8461929

**Description**

TECHNICAL FIELD

This disclosure pertains to machine learning.

BACKGROUND

Some methods, devices and systems for machine learning are known. Although existing devices, systems and methods for machine learning can provide benefits in some contexts, improved devices, systems and methods would be desirable. In 2020, Li and Wang (Reinterpreting CTC training as iterative fitting; arXiv:1904.10619v2; 7 July 2020; DOI:10.48550/ arXiv.1904.10619) reinterpreted the CTC training process as an iterative fitting task that is based on frame-wise cross-entropy loss, which offered an intuitive way to compare target probabilities with model outputs for each iteration, and to explain how the model outputs gradually turns spiky. Inspired by it, they put forward two ways to modify the CTC training.

NOTATION AND NOMENCLATURE

Throughout this disclosure, including in the claims, the terms "speaker," "loudspeaker" and "audio reproduction transducer" are used synonymously to denote any sound-emitting transducer (or set of transducers) driven by a single speaker feed. A typical set of headphones includes two speakers. A speaker may be implemented to include multiple transducers (e.g., a woofer and a tweeter), which may be driven by a single, common speaker feed or multiple speaker feeds. In some examples, the speaker signal(s) may undergo different processing in different circuitry branches coupled to the different transducers.

Throughout this disclosure, including in the claims, the expression performing an operation "on" a signal or data (e.g., filtering, scaling, transforming, or applying gain to, the signal or data) is used in a broad sense to denote performing the operation directly on the signal or data, or on a processed version of the signal or data (e.g., on a version of the signal that has undergone preliminary filtering or pre-processing prior to performance of the operation thereon).

Throughout this disclosure including in the claims, the expression "system" is used in a broad sense to denote a device, system, or subsystem. For example, a subsystem that implements a decoder may be referred to as a decoder system, and a system including such a subsystem (e.g., a system that generates X output signals in response to multiple inputs, in which the subsystem generates M of the inputs and the other X - M inputs are received from an external source) may also be referred to as a decoder system.

Throughout this disclosure including in the claims, the term "processor" is used in a broad sense to denote a system or device programmable or otherwise configurable (e.g., with software or firmware) to perform operations on data (e.g., audio, or video or other image data). Examples of processors include a field-programmable gate array (or other configurable integrated circuit or chip set), a digital signal processor programmed and/or otherwise configured to perform pipelined processing on audio or other sound data, a programmable general purpose processor or computer, and a programmable microprocessor chip or chip set.

Throughout this disclosure including in the claims, the term "couples" or "coupled" is used to mean either a direct or indirect connection. Thus, if a first device couples to a second device, that connection may be through a direct connection, or through an indirect connection via other devices and connections.

As used herein, a "smart device" is an electronic device, generally configured for communication with one or more other devices (or networks) via various wireless protocols such as Bluetooth, Zigbee, near-field communication, Wi-Fi, light fidelity (Li-Fi), 3G, 4G, 5G, etc., that can operate to some extent interactively and/or autonomously. Several notable types of smart devices are smartphones, smart cars, smart thermostats, smart doorbells, smart locks, smart refrigerators, phablets and tablets, smartwatches, smart bands, smart key chains and smart audio devices. The term "smart device" may also refer to a device that exhibits some properties of ubiquitous computing, such as artificial intelligence.

Herein, we use the expression "smart audio device" to denote a smart device which is either a single-purpose audio device or a multi-purpose audio device (e.g., an audio device that implements at least some aspects of virtual assistant functionality). A single-purpose audio device is a device (e.g., a television (TV)) including or coupled to at least one microphone (and optionally also including or coupled to at least one speaker and/or at least one camera), and which is designed largely or primarily to achieve a single purpose. For example, although a TV typically can play (and is thought of as being capable of playing) audio from program material, in most instances a modern TV runs some operating system on which applications run locally, including the application of watching television. In this sense, a single-purpose audio device having speaker(s) and microphone(s) is often configured to run a local application and/or service to use the speaker(s) and microphone(s) directly. Some single-purpose audio devices may be configured to group together to achieve playing of audio over a zone or user configured area.

One common type of multi-purpose audio device is a smart audio device, such as a "smart speaker," which may be configured to implement at least some aspects of virtual assistant functionality, although other aspects of virtual assistant functionality may be implemented by one or more other devices, such as one or more servers with which the multi-purpose audio device is configured for communication. Such a multi-purpose audio device may be referred to herein as a "virtual assistant." A virtual assistant is a device (e.g., a smart speaker or voice assistant integrated device) including or coupled to at least one microphone (and optionally also including or coupled to at least one speaker and/or at least one camera). **In** some examples, a virtual assistant may provide an ability to utilize multiple devices (distinct from the virtual assistant) for applications that are in a sense cloud-enabled or otherwise not completely implemented in or on the virtual assistant itself. **In** other words, at least some aspects of virtual assistant functionality, e.g., speech recognition functionality, may be implemented (at least in part) by one or more servers or other devices with which a virtual assistant may communication via a network, such as the Internet. Virtual assistants may sometimes work together, e.g., in a discrete and conditionally defined way. For example, two or more virtual assistants may work together in the sense that one of them, e.g., the one which is most confident that it has heard a wakeword, responds to the wakeword. The connected virtual assistants may, in some implementations, form a sort of constellation, which may be managed by one main application which may be (or implement) a virtual assistant.

Herein, "wakeword" is used in a broad sense to denote any sound (e.g., a word uttered by a human, or some other sound), where a smart audio device is configured to awake in response to detection of ("hearing") the sound (using at least one microphone included in or coupled to the smart audio device, or at least one other microphone). **In** this context, to "awake" denotes that the device enters a state in which it awaits (in other words, is listening for) a sound command. **In** some instances, what may be referred to herein as a "wakeword" may include more than one word, e.g., a phrase.

Herein, the expression "wakeword detector" denotes a device configured (or software that includes instructions for configuring a device) to search continuously for alignment between real-time sound (e.g., speech) features and a trained model. Typically, a wakeword event is triggered whenever it is determined by a wakeword detector that the probability that a wakeword has been detected exceeds a predefined threshold. For example, the threshold may be a predetermined threshold which is tuned to give a reasonable compromise between rates of false acceptance and false rejection. Following a wakeword event, a device might enter a state (which may be referred to as an "awakened" state or a state of "attentiveness") in which it listens for a command and passes on a received command to a larger, more computationally-intensive recognizer.

As used herein, the terms "program stream" and "content stream" refer to a collection of one or more audio signals, and in some instances video signals, at least portions of which are meant to be heard together. Examples include a selection of music, a movie soundtrack, a movie, a television program, the audio portion of a television program, a podcast, a live voice call, a synthesized voice response from a smart assistant, etc. In some instances, the content stream may include multiple versions of at least a portion of the audio signals, e.g., the same dialogue in more than one language. In such instances, only one version of the audio data or portion thereof (e.g., a version corresponding to a single language) is intended to be reproduced at one time.

SUMMARY

The invention is defined in independent claims 1, 7 and 8. Preferred embodiments are covered by dependent claims 2-6.

In some examples, the cluster boundary information may be incomplete cluster boundary information. However, in some alternative examples, the cluster boundary information may be complete cluster boundary information.

When determining, by the control system, the plurality of extracted features, the method involves updating, by the control system, parameters for determining the plurality of extracted features according to losses determined by the loss function.

In some examples, the sequential information of the cost function, the cluster boundary information of the cost function, or both, may be variable. According to some examples, the loss function may combine elements of connectionist temporal classification and cross-entropy loss.

When the operations, functions and/or methods described herein are performed by one or more devices according to instructions (e.g., software) stored on one or more non-transitory media, such non-transitory media may include memory devices such as those described herein, including but not limited to random access memory (RAM) devices, read-only memory (ROM) devices, etc. Accordingly, some innovative aspects of the subject matter described in this disclosure can be implemented via one or more non-transitory media having software stored thereon.

At least some aspects of the present disclosure may be implemented via apparatus. For example, one or more devices (e.g., a system that includes one or more devices) may be capable of performing, at least in part, the methods disclosed herein. In some implementations, an apparatus is, or includes, an audio processing system having an interface system and a control system. The control system may include one or more general purpose single- or multi-chip processors, digital signal processors (DSPs), application specific integrated circuits (ASICs), field programmable gate arrays (FPGAs) or other programmable logic devices, discrete gates or transistor logic, discrete hardware components, or combinations thereof. The control system may be configured for implementing some or all of the methods disclosed herein.

Details of one or more implementations of the subject matter described in this specification are set forth in the accompanying drawings and the description below. Other features, aspects, and advantages will become apparent from the description, the drawings, and the claims. Note that the relative dimensions of the following figures may not be drawn to scale.

BRIEF DESCRIPTION OF THE DRAWINGS

Like reference numbers and designations in the various drawings indicate like elements.

Figure 1A is a block diagram that shows examples of components of an apparatus capable of implementing various aspects of this disclosure.
Figure 1B shows an example of an audio environment.
Figures 2 and 3 show examples of blocks that may be included in some disclosed pinned-state connectionist sequential classification (PS-CSC) implementations.
Figure 4 shows example blocks involved in using PS-CSC to train a neural network for a speaker diarization use case.
Figures 5A, 5B and 5C show the results of an experiment involving a conventional method in a speaker diarization use case.
Figures 6A and 6B show the results of an experiment involving a PS-CSC method in a speaker diarization use case.
Figure 7 shows the results of two additional experiments.
Figure 8 is a flow diagram that outlines the disclosed method.

DETAILED DESCRIPTION OF EMBODIMENTS

Machine learning methods based on cross-entropy loss and its variations, and machine learning methods based on connectionist temporal classification (CTC) use different loss objectives and are generally used for different purposes in the machine learning community. Machine learning methods based on cross-entropy loss are usually used to train neural network models for problems of classification, for use cases such as face classification based on images or talker identification based on speech signals. Machine learning methods based on cross-entropy loss may involve obtaining and/or learning cluster boundary information. In contrast, machine learning methods based on CTC are typically applied when sequential information needs to be explored, for use cases such as automatic speech recognition and handwriting recognition.

This disclosure provides examples of machine learning methods that are based on cluster boundary information as well as sequential information. Such methods may be referred to herein as pinned-state connectionist sequential classification (PS-CSC) methods. According to some PS-CSC examples, a loss function used for training a neural network may be based on cluster boundary information as well as sequential information. In some PS-CSC examples, the cluster boundary information may be, or may include incomplete cluster boundary information. In some PS-CSC examples, a loss function used for training a neural network may combine elements of CTC and cross-entropy loss.

In some PS-CSC examples, a disclosed neural network training process may involve receiving an observation sequence that includes a plurality of extracted features. According to some examples, the observation sequence may be a temporal sequence, whereas in other examples the observation sequence may be a spatial sequence. Each extracted feature may correspond to a sequential signal of a sequence of sequential signals. In some instances, the training process may involve determining a lattice of posterior possibilities. The lattice may include a possibility of each observation sequence corresponding to one label class of a plurality of label classes. According to some examples, the labels may be monotonically aligned with the observations.

According to some PS-CSC examples, applying the loss function may involve determining one or more valid paths between observations in the lattice. In some such examples, pinned states of observations in the lattice may reduce the number of valid paths and therefore reduce the time and computational overhead required for convergence during a neural network training process.

A neural network that is trained according to some disclosed methods is configured to perform one or more downstream tasks. The downstream tasks vary according to the type of signals in the sequence of sequential signals. When the sequence of sequential signals is a sequence of handwriting images, the downstream task is handwriting recognition. When the sequence of sequential signals is a sequence of a sequence of audio signals, the downstream task(s) is (are) acoustic event detection, talker diarization and/or automatic speech recognition.

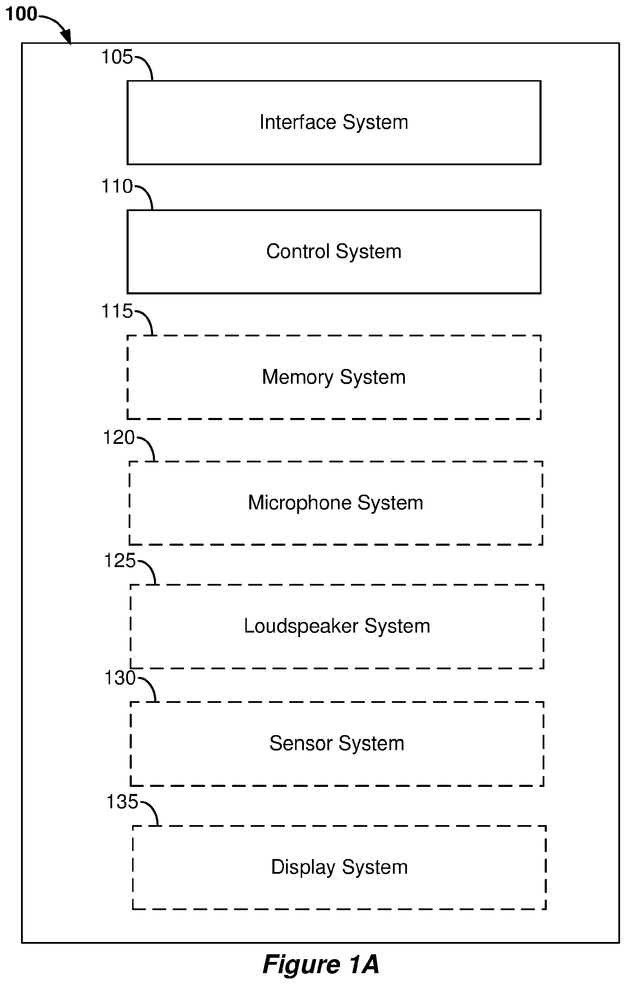

Figure 1A is a block diagram that shows examples of components of an apparatus capable of implementing various aspects of this disclosure. As with other figures provided herein, the types, numbers and arrangements of elements shown in Figure 1A are merely provided by way of example. Other implementations may include more, fewer and/or different types, numbers and arrangements of elements. According to some examples, the apparatus 100 may be configured for performing at least some of the methods disclosed herein. In some implementations, the apparatus 100 may be, or may include, one or more components of an office workstation, one or more components of a home entertainment system, etc. For example, the apparatus 100 may be a laptop computer, a tablet device, a mobile device (such as a cellular telephone), a smart home hub, a television or another type of device.

According to some alternative implementations the apparatus 100 may be or may include a server. In some such examples, the apparatus 100 may be, or may include an encoder. In some examples, the apparatus 100 may be, or may include a decoder. Accordingly, in some instances the apparatus 100 may be a device that is configured for use within an environment, such as a home environment, whereas in other instances the apparatus 100 may be a device that is configured for use in "the cloud," e.g., a server.

In this example, the apparatus 100 includes an interface system 105 and a control system 110. The interface system 105 may, in some implementations, be configured for communication with one or more other devices of an environment. The environment may, in some examples, be a home environment. In other examples, the environment may be another type of environment, such as an office environment, an automobile environment, a train environment, a street or sidewalk environment, a park environment, etc. The interface system 105 may, in some implementations, be configured for exchanging control information and associated data with other devices of the environment. The control information and associated data may, in some examples, pertain to one or more software applications that the apparatus 100 is executing.

The interface system 105 may, in some implementations, be configured for receiving, or for providing, a content stream. In some examples, the content stream may include video data and audio data corresponding to the video data. The audio data may include, but may not be limited to, audio signals. In some instances, the audio data may include spatial data, such as channel data and/or spatial metadata. Metadata may, for example, have been provided by what may be referred to herein as an "encoder."

The interface system 105 may include one or more network interfaces and/or one or more external device interfaces (such as one or more universal serial bus (USB) interfaces). According to some implementations, the interface system 105 may include one or more wireless interfaces. The interface system 105 may include one or more devices for implementing a user interface, such as one or more microphones, one or more speakers, a display system, a touch sensor system, a gesture sensor system, or combinations thereof. Accordingly, while some such devices are represented separately in Figure 1A, such devices may, in some examples, correspond with aspects of the interface system 105.

In some examples, the interface system 105 may include one or more interfaces between the control system 110 and a memory system, such as the optional memory system 115 shown in Figure 1A. Alternatively, or additionally, the control system 110 may include a memory system in some instances. The interface system 105 may, in some implementations, be configured for receiving input from one or more microphones in an environment.

The control system 110 may, for example, include a general purpose single- or multi-chip processor, a digital signal processor (DSP), an application specific integrated circuit (ASIC), a field programmable gate array (FPGA) or other programmable logic device, discrete gate or transistor logic, discrete hardware components, or combinations thereof.

In some implementations, the control system 110 may reside in more than one device. For example, in some implementations a portion of the control system 110 may reside in a device within one of the environments referred to herein and another portion of the control system 110 may reside in a device that is outside the environment, such as a server, a mobile device (such as a smartphone or a tablet computer), etc. In other examples, a portion of the control system 110 may reside in a device within one of the environments depicted herein and another portion of the control system 110 may reside in one or more other devices of the environment. For example, control system functionality may be shared by an orchestrating device (such as what may be referred to herein as a smart home hub) and one or more other devices of the environment. In other examples, a portion of the control system 110 may reside in a device that is implementing a cloud-based service, such as a server, and another portion of the control system 110 may reside in another device that is implementing the cloud-based service, such as another server, a memory device, etc. The interface system 105 also may, in some examples, reside in more than one device.

In some implementations, the control system 110 is configured to perform, at least in part, the methods disclosed herein. According to some examples, the control system 110 is configured to receive an observation sequence comprising a plurality of extracted features. Each extracted feature of the plurality of extracted features corresponds to a sequential signal of a sequence of sequential signals. The control system 110 is configured to determine the plurality of extracted features.

The control system 110 is configured to determine a lattice of posterior possibilities. The lattice includes a possibility of each observation sequence corresponding to one label class of a plurality of label classes.

The control system 110 is configured to apply a loss function to the lattice of posterior possibilities according to ground truth values. Applying the loss function involves applying both sequential information and cluster boundary information.

The control system 110 is configured to update parameters for determining the lattice of posterior possibilities according to losses determined by the loss function. The control system 110 is configured to train a neural network by performing the above processes until the control system 110 determines that one or more convergence criteria are met.

As noted elsewhere herein, the control system 110 may reside in a single device or in multiple devices, depending on the particular implementation. In some examples, all of the foregoing processes may be performed by the same device. In some alternative examples, the foregoing processes may be performed by two or more devices. For example, the embeddings may be produced by one device and the lattice of posterior possibilities may be performed by one or more other devices. In some such examples, one or more processes may be performed by one or more servers configured to implement a cloud-based service.

Some or all of the methods described herein may be performed by one or more devices according to instructions (e.g., software) stored on one or more non-transitory media. Such non-transitory media may include memory devices such as those described herein, including but not limited to random access memory (RAM) devices, read-only memory (ROM) devices, etc. The one or more non-transitory media may, for example, reside in the optional memory system 115 shown in Figure 1A and/or in the control system 110. Accordingly, various innovative aspects of the subject matter described in this disclosure can be implemented in one or more non-transitory media having software stored thereon. The software may, for example, include instructions for controlling at least one device to perform some or all of the methods disclosed herein. The software may, for example, be executable by one or more components of a control system such as the control system 110 of Figure 1A.

In some examples, the apparatus 100 may include the optional microphone system 120 shown in Figure 1A. The optional microphone system 120 may include one or more microphones. According to some examples, the optional microphone system 120 may include an array of microphones. In some examples, the array of microphones may be configured to determine direction of arrival (DOA) and/or time of arrival (TOA) information, e.g., according to instructions from the control system 110. The array of microphones may, in some instances, be configured for receive-side beamforming, e.g., according to instructions from the control system 110. In some implementations, one or more of the microphones may be part of, or associated with, another device, such as a speaker of the speaker system, a smart audio device, etc. In some examples, the apparatus 100 may not include a microphone system 120. However, in some such implementations the apparatus 100 may nonetheless be configured to receive microphone data corresponding to one or more microphones in an environment, or corresponding to one or more microphones in another environment, via the interface system 110. In some such implementations, a cloud-based implementation of the apparatus 100 may be configured to receive microphone data, or metadata corresponding to the microphone data, obtained in one or more microphones in an environment via the interface system 110.

According to some implementations, the apparatus 100 may include the optional loudspeaker system 125 shown in Figure 1A. The optional loudspeaker system 125 may include one or more loudspeakers, which also may be referred to herein as "speakers" or, more generally, as "audio reproduction transducers." In some examples (e.g., cloud-based implementations), the apparatus 100 may not include a loudspeaker system 125.

In some implementations, the apparatus 100 may include the optional sensor system 130 shown in Figure 1A. The optional sensor system 130 may include one or more touch sensors, gesture sensors, motion detectors, cameras, eye tracking devices, or combinations thereof. In some implementations, the one or more cameras may include one or more freestanding cameras. In some examples, one or more cameras, eye trackers, etc., of the optional sensor system 130 may reside in a television, a mobile phone, a smart speaker, or combinations thereof. In some examples, the apparatus 100 may not include a sensor system 130. However, in some such implementations the apparatus 100 may nonetheless be configured to receive sensor data for one or more sensors (such as cameras, eye trackers, etc.) residing in or on other devices in an environment via the interface system 110.

In some implementations, the apparatus 100 may include the optional display system 135 shown in Figure 1A. The optional display system 135 may include one or more displays, such as one or more light-emitting diode (LED) displays. In some instances, the optional display system 135 may include one or more organic light-emitting diode (OLED) displays. In some examples, the optional display system 135 may include one or more displays of a television, a laptop, a mobile device, a smart audio device, or another type of device. In some examples wherein the apparatus 100 includes the display system 135, the sensor system 130 may include a touch sensor system and/or a gesture sensor system proximate one or more displays of the display system 135. According to some such implementations, the control system 110 may be configured for controlling the display system 135 to present one or more graphical user interfaces (GUIs).

According to some such examples the apparatus 100 may be, or may include, a smart audio device, such as a smart speaker. In some such implementations the apparatus 100 may be, or may include, a wakeword detector. For example, the apparatus 100 may be configured to implement (at least in part) a virtual assistant.

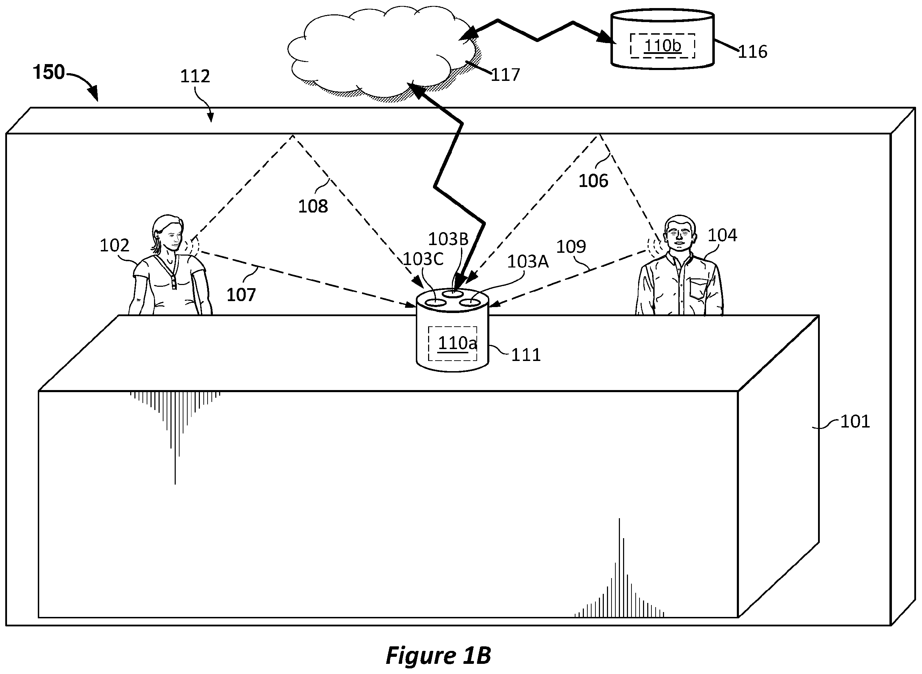

Figure 1B shows an example of an audio environment. As with other figures provided herein, the types, numbers and arrangements of elements shown in Figure 1B are merely provided by way of example. Other implementations of the audio environment 150 may include more, fewer and/or different types, numbers or arrangements of elements.

In this example, person 102 and person 104 are seated at a table 101 on which the audio device 111 has been placed. According to this example, the audio device 111 is configured to capture audio signals-including but not limited to audio signals corresponding to the speech of person 102 and person 104-via microphones 103A, 103B and 103C. Speech of the person 102 and person 104 produces direct acoustic waves 105 and 107, as well as reflected acoustic waves 106 and 108 from the ceiling 112 and other parts of the audio environment 100, which are captured by the audio device 111.

According to some examples, the control system 110a of the audio device 111 may be configured for providing acoustic event detection functionality, automatic speech recognition functionality and/or speaker diarization functionality. Alternatively, or additionally, the control system 110b of the server 116, with which the audio device 111 is configured for communication via the network 117, may be configured for providing acoustic event detection functionality, automatic speech recognition functionality and/or speaker diarization functionality. This disclosure discloses methods, devices and systems that may be used for training a neural network to provide such functionality and/or other functionality, such as handwriting recognition functionality. This disclosure also discloses trained neural networks that are configured to provide such functionality.

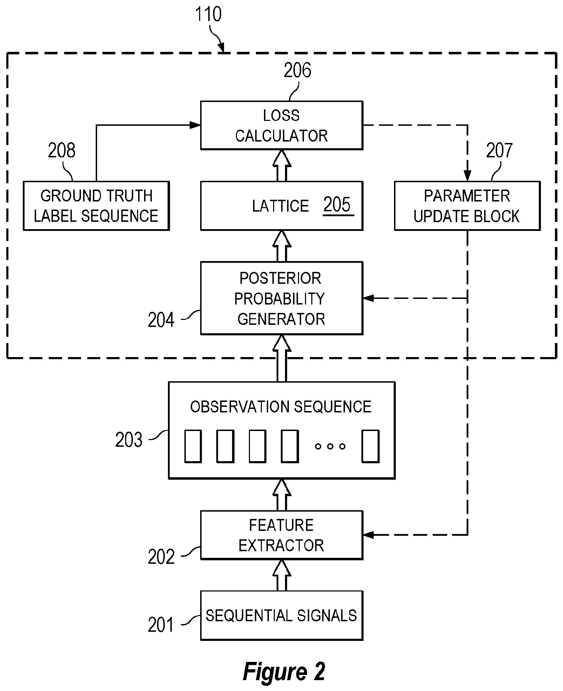

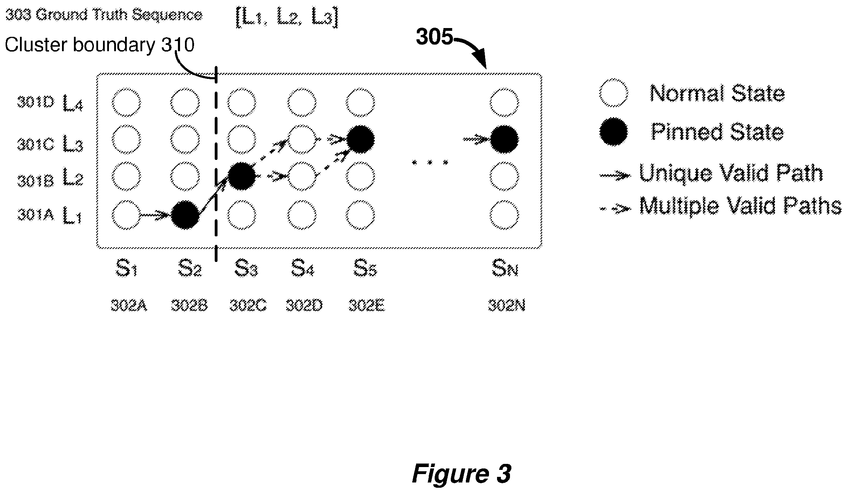

Figures 2 and 3 show examples of blocks that may be included in some disclosed pinned-state connectionist sequential classification (PS-CSC) implementations. As with other figures provided herein, the types, numbers and arrangements of elements shown in Figures 2 and 3 are merely provided by way of example. Other implementations may include more, fewer and/or different types, numbers and/or arrangements of elements.

According to this example, Figure 2 shows blocks that are implemented by an instance of the control system 110 that is described with reference to Figure 1A. As noted elsewhere herein, the control system 110 may, in some instances, reside in more than one device. In this example, the control system 110 is implementing at least the posterior probability generator 204 and the loss calculator 206. According to this example, the loss calculator 206 is configured to apply a loss function that implements PS-CSC. In some alternative examples, the control system 110 may also implement the feature extractor 202.

In this example, the posterior probability generator 204 is configured for generating the posterior probability lattice 205. The posterior probability lattice 305 shown in Figure 3 is a specific example of the posterior probability lattice 205 that is shown in Figure 2. Similarly, the ground truth label sequence 303 [L1, L2, L3] shown in Figure 3 is an example of the ground truth label sequence 208 that is shown in Figure 2. The ground truth label sequence 208 may, for example, reside in a data structure stored in a memory of the control system 110, or a memory that is accessible by the control system 110.

According to this example, the posterior probability generator 204 is configured for generating the posterior probability lattice 205 from an observation sequence 203. In this example, the observation sequence 203 includes a plurality of extracted features that are extracted by the feature extractor 202. In this example, each extracted feature produced by the feature extractor 202 corresponds to, and has been produced by the feature extractor 202 from, a sequential signal of a sequence of sequential signals 201.

The extracted features in the observation sequence 203 may vary according to the particular implementation. In some examples, the sequence of sequential signals may be a time sequence of audio signals. In some such examples, the extracted features in the observation sequence 203 may simply be time samples of audio signals, whereas in other examples the extracted features in the observation sequence 203 may be vector representations of time samples of audio signals. In some examples, the extracted features may be, or may include frequency band or bin energies. According to some examples, the extracted features may be, or may include, transform bins stacked across multiple channels.

However, in other examples the sequence of sequential signals may be a spatial sequence, such as a spatial sequence of handwriting images. In some such examples, the extracted features in the observation sequence 203 may be vector representations of segmented input images. In some examples, the extracted features in the observation sequence 203 may be vector representations of segmented input images with a specific receptive field that defines the length and width of an image segment.

If the sequence of sequential signals is a time sequence of audio signals that include human speech, in some examples the ground truth label sequence 208 may be, or may include, the identities of each talker of a sequence of talkers. The ground truth label sequence 208 may be represented as [L1, L2, ... ], such as [L1, L2, L3], [L1, L2, L3, L4], etc., wherein each "L" value corresponds with a label, such as a talker identity.

According to some examples in which the sequence of sequential signals is a time sequence of audio signals that include audio signals corresponding to human speech, the posterior probability generator 204 may be configured for generating the posterior probability lattice 205 by estimating the probabilities of each of the extracted features in the observation sequence 203 to be of the class indicated by one of the ground truth labels in ground truth label sequence 208. One example of a class is the identity of each talker of a sequence of talkers. In some such examples in which the ground truth label sequence 208 is [L1, L2, L3 and L4], the posterior probability generator 204 may be configured for generating the posterior probability lattice 205 by estimating the probabilities of each of the extracted features in the observation sequence 203 to be of the class [L1, L2, L3 or L4].

In the example shown in Figure 2, the loss calculator 206 is configured to apply a loss function that implements PS-CSC. Various examples and details are described below. Here, the loss calculator 206 is configured to apply the loss function to the values of the posterior probability lattice 205, according to the ground truth label sequence 208. According to this example, the loss calculator 206 is configured to provide updated parameters-which are represented in Figure 2 as the parameter update block 207-according to losses determined by the loss function. The parameter update block 207 may, for example, be a data structure that is stored in a memory of, or a memory accessible by, the control system 110. In this example, the loss calculator 206 is configured to provide the updated parameters to the posterior probability generator 204 for generating the posterior probability lattice 205. According to some examples, the loss calculator 206 may be configured to provide updated parameters to the feature extractor 202 for determining the plurality of extracted features in the observation sequence 203.

A group of extracted features having the same label, such as a group of sequential extracted features corresponding to the same talker, is one example of what may be referred to herein as a "cluster." A transition from one class of extracted features to another class of extracted features-in this example, a transition from extracted features corresponding to one talker to extracted features corresponding to another talker-indicates, or corresponds to, what may be referred to herein as a "cluster boundary." For example, a cluster of sequential extracted features (also referred to as a cluster of sequential observations) corresponding to the same talker may be said to have a first cluster boundary just prior to the first such extracted feature and a second cluster boundary just prior to the last extracted feature in the sequence that corresponds to the same talker. For example, referring to Figure 3, one may observe that observations 302A and 302B correspond to label/talker L1, whereas observation 302C corresponds to label/talker L2. Accordingly, there is a cluster boundary 310 between observation 302B and observation 302C.

As noted above, the ground truth label sequence [L1, L2, L3] shown in Figure 3 is an example of the ground truth label sequence 208 that is shown in Figure 2. According to this example, the posterior probability lattice 305 indicates four circles for each of the observations 302A-302N. Each circle represents a probability of the corresponding observation being in class L1, L2, L3 or L4.

In this example, the underlying labels are monotonically aligned with observations. For example, an observation immediately following another observation aligned with L2 will not be aligned with L1. Instead, the observation could only be aligned with L2 or L3.

According to the examples shown in Figure 3, the solid black circles correspond to "pinned states," meaning that the state-or label-of each corresponding observation is known in advance. Conversely, the un-filled circles correspond to "normal states," meaning that the state-or label-of each corresponding observation is not known in advance. Because the states of sequential observations 302B and 302C are known-and because the underlying labels are known to be monotonically aligned with observations-there is only one valid path within the posterior probability lattice 305 between the states of sequential observations 302B and 302C. Because the states of observations 302C and 302E are also known, there are only two valid paths within the posterior probability lattice 305 between the states of observations 302C and 302E. If there were no pinned state information, or cluster boundary information, for different classes, there would be larger number of potentially valid paths between the states of observations within the posterior probability lattice 305.

Therefore, PS-CSC implementations can result in faster convergence and lower computational overhead. Moreover, the posterior probability generator 204 does not need to determine probabilities for observations having a pinned state. Accordingly, the pinned states of some PS-CSC implementations can result in yet lower computational overhead. Accordingly, Figure 3 illustrates-or at least suggests-potential advantages of PS-CSC implementations.

As noted above, in the examples described with reference to Figures 2 and 3, the loss calculator 206 is configured to apply a loss function that implements PS-CSC. Some examples are described below.

PS-CSC Loss Function Examples

Suppose there is only one observation sequence $X = [x_1, x_2, x_3, ... x_N]$-for example, one instance of the observation sequence 203 shown in Figure 2-that is generated by a feature extractor-such as the feature extractor 202-from corresponding sequential signals. In some examples, there may be multiple observation sequences. **In** some such examples, the loss function may provide a summation of individual loss values. However, without loss of generality, the following examples involve one observation sequence for the sake of simplicity. The corresponding ground truth label in one such example is $[L_1, L_2, L_3]$, which is the ground truth label sequence 303 shown in Figure 3. According to the following examples, paths through a posterior probability lattice are represented as $\pi$. One possible path would be $\pi_1 = [L_1, L_1, L_2, L_2 ... L_3]$. By applying an independency assumption-which may be the same independency assumption as that of connectionist temporal classification (CTC)), the probability of the whole path may be represented as follows:

$$\log p(\pi_1|X) = \log \prod_{\pi_1^s} p(\pi_1^s|x_s) \tag{1}$$

In Equation (1), $s \in [1, N]$ represents the sequence observation index, $\pi_1^s$ represents the $s^{th}$ aligned label in the path $\pi_1$

and $p(\pi_1^s|x_s)$ represents the probability to be path $\pi_1^s$ when observed from $x_s$. In other words, the length of the path $\pi_1$ is the same of the number of vectors in X, which may be represented as $[x_1, x_2, ..., x_N]$. In the path $\pi_1$, each vector $x^s$ is associated with a label $\pi_1^s$. For example, in $\pi_1$ path, $x^1$ is labeled as $\pi_1^1$, that is $L_1$. But for another path, for example the path $\pi_2$, $x^1$ may be labeled differently. These probabilities may, for example, be generated by the posterior probability extractor 204 of Figure 2. In the example of Figure 3, $\pi_1^1 = L_1$ and $\pi_1^3 = L_2$.

In one example, the loss function may represent the summation of all possible paths as follows:

$$L_{ps-csc} = -\sum_k \log p(\pi_k|X) \tag{2}$$

In Equation (2), *k* represents the index of a valid path.

The pinned states shown in Figure 3 mean that a particular state must be passed by a valid path. The pinned states are given as prior knowledge in this example. Because of the pinned states, the number of valid paths will be reduced. One may regard CTC loss as an extreme instance of PS-CSC, in which there is no pinned state.

For another extreme case, in which the alignment for every observation in the given observation sequence is known, then there is only one possible path. This single path may be referred to as $\pi_{ce}$ for simplicity. The PS-CTC objective function then may be represented as follows:

$$L_{ps-csc} = -\log p(\pi_{ce}|X) = -\sum_{s=1}^{N} y_s \log p(\pi_{ce}^s|x_s) \tag{3}$$

One may observe that Equation 3 is the same as cross-entropy loss when $y_s$ is a one-hot vector.

Speaker Diarization Examples

Conventionally, in speaker recognition systems (including speaker identification, verification), an embedding extractor is first trained. This is the de-factor process that is disclosed in Kinnunen, Tomi, and Haizhou Li, "An overview of text-independent speaker recognition: From features to supervectors," in Speech communication 52, no. 1 (2010), pages 12-40, as well as the i-vector system disclosed in Dehak, Najim, et al., "Front-end factor analysis for speaker verification." In IEEE Transactions on Audio, Speech, and Language Processing 19, no. 4 (2010): pages 788-798, as well as those using a neural network as an extractor (such as the x-vector system disclosed in Snyder, David, et al., "X-vectors: Robust dnn embeddings for speaker recognition," in 2018 IEEE international conference on acoustics, speech and signal processing (ICASSP), pp. 5329-5333. (IEEE, 2018)). A following cosine distance similarity or probabilistic linear discriminant analysis (PLDA) is typically then applied or trained to measure the similarity between two embeddings.

Those embedding extractors are trained with objective functions such cross-entropy with SoftMax or its variations (e.g., angular SoftMax, additive marginal SoftMax, etc), which maps the aggregated utterance-level embedding to its corresponding class label, using cross-entropy loss. This means that the extractor learns to accumulate identity-related information in one utterance.

In some use cases, for example online speaker diarization, the goal is to identify who speaks at what time. This process typically takes place within a limited time duration (which may be a few seconds or less), which means that the amount of information to gather is also limited. The duration is constrained by the tolerance interval between boundaries of two decisions, which is typically 250 to 300 milliseconds. Furthermore, in the foregoing examples, the embedding extractor is not trained in a sequential manner in the diarization scenario.

Some disclosed examples involve using the PS-CSC to learn both the speaker identity and time alignment. The loss applied by the loss function may allow a neural network to learn how to map sequential embeddings to a sequential label which may be regarded as a sequence-to-sequence problem. Unlike in the speech recognition use case, a blank is not needed if two segments are from the same speaker, because the same speaker label is shared by both of them. Because the boundaries of some labels may be known in advance, that boundary information may be provided to the PS-CSC prior to the training process, which is not possible in CTC or cross-entropy loss.

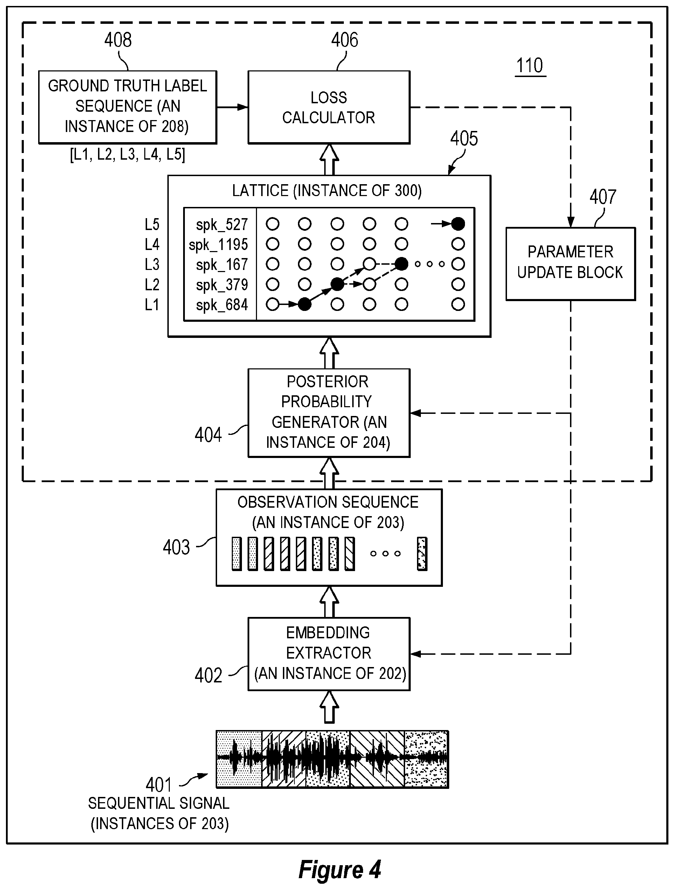

Figure 4 shows example blocks involved in using PS-CSC to train a neural network for a speaker diarization use case. As with other figures provided herein, the types, numbers and arrangements of elements shown in Figure 4 are merely provided by way of example. Other implementations may include more, fewer and/or different types, numbers and/or arrangements of elements.

According to this example, Figure 4 shows blocks that are implemented by an instance of the control system 110 that is described with reference to Figure 1A. As noted elsewhere herein, the control system 110 may, in some instances, reside in more than one device. In this example, the control system 110 is configured for implementing at least the posterior probability generator 404, the loss calculator 406 and the parameter update block 407, which are instances of the posterior probability generator 204, the loss calculator 206 and the parameter update block 207, respectively, of Figure 2. According to this example, the loss calculator 406 is configured to apply a loss function that implements PS-CSC. In some alternative examples, the control system 110 may also implement the embedding extractor 402, which is an instance of the feature extractor 202 of Figure 2.

In this example, the input sequential signals 401 are audio data samples that include audio signals corresponding to the speech of talkers-or speakers-spk_684, spk_379, spk_167, spk_1195 and spk_527, in that order. Accordingly, the ground truth label sequence 408 includes labels L1, L2, L3, L4 and L5, corresponding to talkers spk_684, spk_379, spk_167, spk_1195 and spk_527, respectively. According to this example, the embedding extractor 402 produces the observation sequence 403, which are talker embeddings corresponding to the speech of talkers spk_684, spk_379, spk_167, spk_1195 and spk_527, from the input sequential signals 401.

According to this example, the posterior probability generator 404 is configured for generating the posterior probability lattice 405. In this example, the posterior probability generator 404 is configured for generating the posterior probability lattice 405 by estimating the probabilities of each of the extracted features in the observation sequence 403 to be of the class indicated by one of the ground truth labels in ground truth label sequence 408. In this example, the ground truth label sequence 408 is [L1, L2, L3, L4, L5] and the posterior probability generator 404 is configured for generating the posterior probability lattice 405 by estimating the probabilities of each of the extracted features in the observation sequence 403 to be of the class L1, L2, L3, L4 or L5.

In the example shown in Figure 4, the loss calculator 406 is configured to apply a loss function that implements PS-CSC. Here, the loss calculator 406 is configured to apply the loss function to the values of the posterior probability lattice 405, according to the ground truth label sequence 408. According to this example, the loss calculator 406 is configured to provide updated parameters-which are represented in Figure 4 as the parameter update block 407-according to losses determined by the loss function. In this example, the loss calculator 406 is configured to provide the updated parameters to the posterior probability generator 404 for generating the posterior probability lattice 405. According to some examples, the loss calculator 406 may be configured to provide updated parameters to the embedding extractor 402 for determining the plurality of extracted features in the observation sequence 403.

Experimental Results

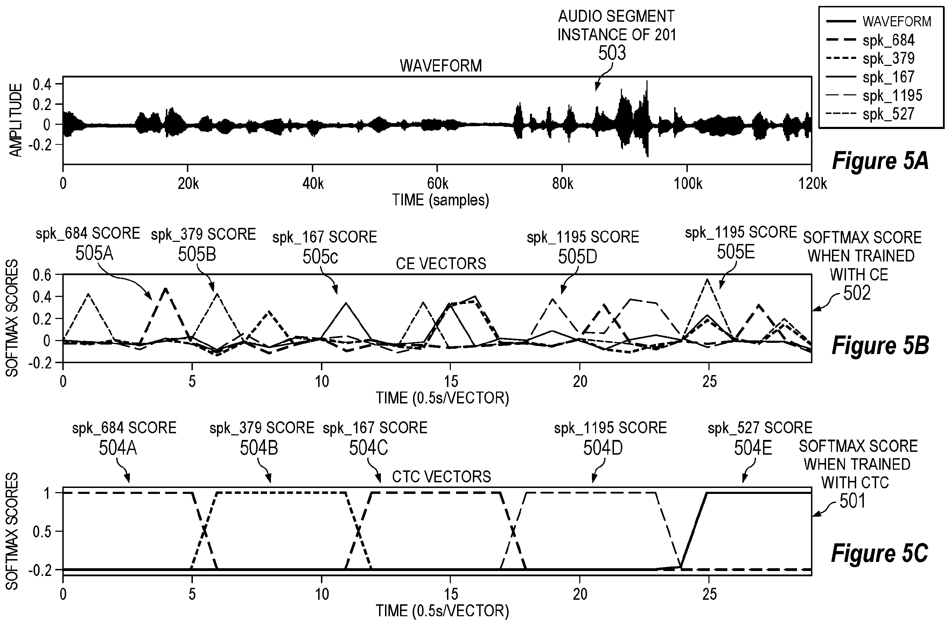

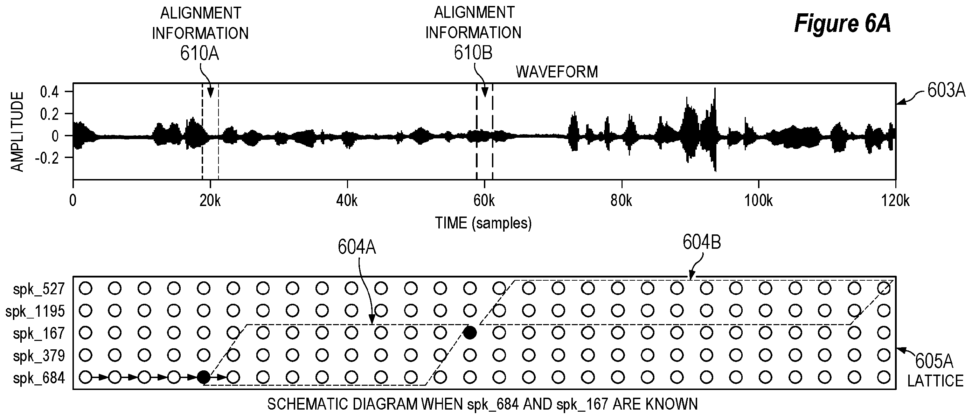

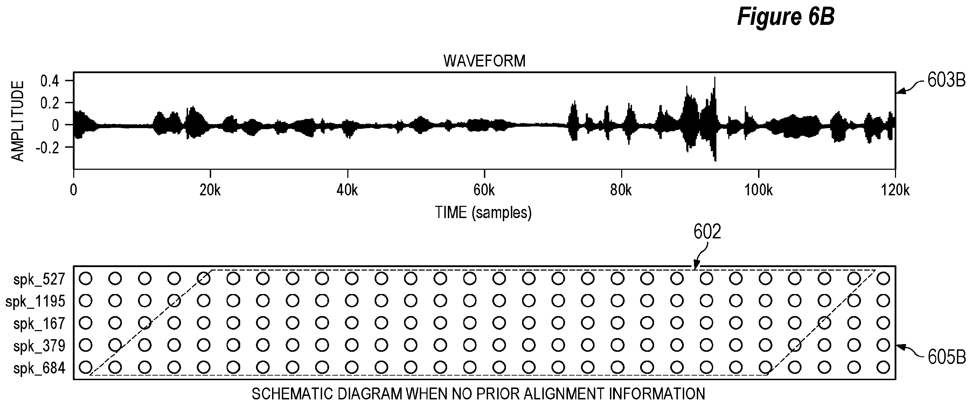

The present inventors have performed experiments in order to show the potential of PS-CSC in a speaker diarization scenario. Figures 5A, 5B and 5C show the results of an experiment involving a conventional method in a speaker diarization use case. In the examples represented by Figures 5A-5C, an embedding extractor has been trained with cross-entropy loss. In these examples, no sequential information was introduced during the training process. Figures 6A and 6B show the results of an experiment involving a PS-CSC method in a speaker diarization use case. In the examples represented by Figures 6A and 6B, sequential information was provided during the training process, and an embedding extractor was trained using CTC. The methods represented by Figure 5A-5C and Figures 6A and 6B shared the same datasets and models. In each case, a SoftMax score was then used to indicate the quality of extracted speaker embedding for diarization.

In the experiment represented by Figures 5A-5C, sequence boundary information was not provided during training. Using PS-CSC the separability was improved, and the training time was reduced, both resulting at least in part from the sequence boundary information provided during the training process.

**In** the experiment represented by Figures 5A-5C, the ground truth label sequence is [spk_684, spk_379, spk_167, spk_1195, spk_527]. Figure 5A shows example input audio segments 503 in the time domain. Figure 5B shows graph 502, including curves 505A, 505B, 505E, 505E and 505E, which represent the SoftMax scores for the speech of talkers spk_684, spk_379, spk_167, spk_1195 and spk_527, respectively, when the neural network was trained with a CE cost function, but without sequential information. It can be seen in Figure 5B that the neural network trained without sequential information did not perform well to predict speaker alignment.

Figure 5C shows graph 501, including curves 504A, 504B, 504E, 504E and 504E, which represent the SoftMax scores for the speech of talkers spk_684, spk_379, spk_167, spk_1195 and spk_527, respectively, when the neural network was trained with a sequential loss cost function (CTC). By comparing Figure 5C with Figure 5B, one may observe that when provided with sequential information during the training process, the neural network performed much better. For example, it can be clearly seen from graph 501 that frames from time units 0 to 5 aligned to spk_684 with high probabilities. However, in graph 502, there is no obvious trend.

The experiment represented by Figures 5A-5C shows that using sequential information when training a neural network is highly useful in speaker diarization use cases.

Figures 6A and 6B shows the advantages of using sequential information and alignment information in a PS-CSC implementation. With some prior alignment information, also referred to herein as pinned state information, the number of valid paths through the lattice of posterior possibilities that need to be computed during training will be shrunk to a smaller number.

Figure 6A shows example input audio segments 603A in the time domain, as well as alignment information 610A and 610B. Figure 6A also shows an example of a lattice of posterior possibilities 205 of Figure 2, which is the lattice of posterior possibilities 605A in this instance. According to this example, as in Figure 3, the solid black circles in the lattice of posterior possibilities 605A indicate pinned states, each of which corresponds with one of the instances of alignment information 610A and 610B. In this example, only alignments corresponding to spk_684 and spk_379 are known prior to the neural network training process. Figure 6A shows regions 604A and 604B within the lattice of posterior possibilities 605A. In this example, regions 604A and 604B are regions within which valid paths through the lattice of posterior possibilities 605A could exist, given the known alignment information 610A and 610B.

Figure 6B also shows example input audio segments 603B in the time domain but includes no alignment information. Figure 6B also shows the lattice of posterior possibilities 605B. According to this example there are no solid black circles in the lattice of posterior possibilities 605A indicating pinned states, because no alignment information was provided. In this example, valid paths through the lattice of posterior possibilities 605B could exist within region 602, because no prior alignment information was provided before training. One may observe that even give only the alignment information 610A and 610B, the regions 604A and 604B are each much smaller than region 602. Accordingly, because no prior alignment information was provided before training, the number of valid paths through the lattice of posterior possibilities 605B is substantially larger than the number of valid paths through the lattice of posterior possibilities 605A.

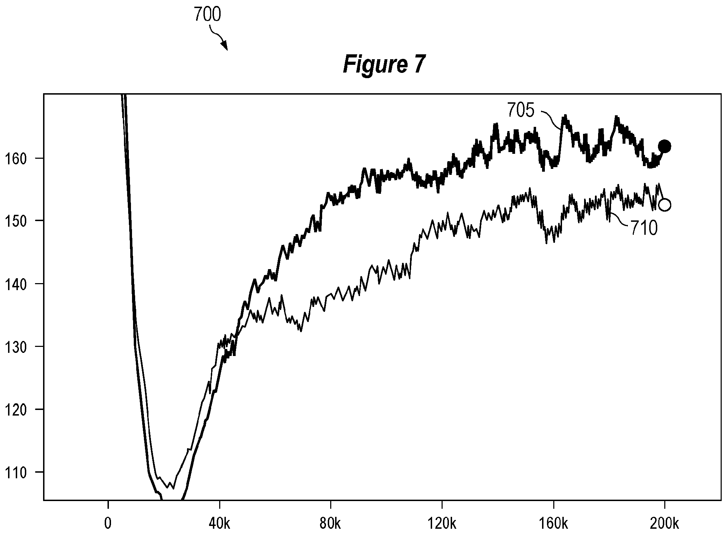

Figure 7 shows the results of two additional experiments. In this example, the graph 700 indicates the loss determined by a loss function on the vertical axis and the number of iterations of a neural network training process on the horizontal axis. According to this example, the curve 705 indicates loss values corresponding to a CTC-based neural network training process, whereas the curve 710 indicates loss values corresponding to a PS-CSC-based neural network training process. One may observe that after about 45,000 iterations, the loss corresponding to the PS-CSC-based neural network training process was consistently less than the loss corresponding to the CTC-based neural network training process.

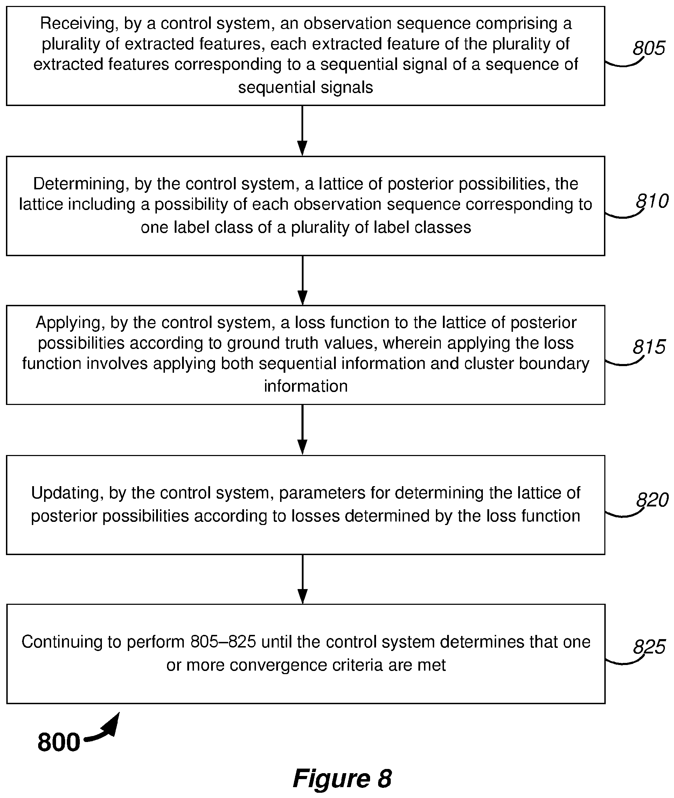

Figure 8 is a flow diagram that outlines the disclosed method. The blocks of method 800, like other methods described herein, are not necessarily performed in the order indicated. According to some examples, one or more blocks may be performed in parallel. Moreover, some similar methods may include more or fewer blocks than shown and/or described.

The method 800 may be performed by an apparatus, such as the apparatus 100 that is shown in Figure 1A and described above. In some examples, the apparatus 100 includes at least the control system 110 disclosed herein. In some examples, at least some aspects of method 800 may be performed by one or more devices within an audio environment, e.g., by an audio system controller (such as what may be referred to herein as a smart home hub) or by another component of an audio system, such as a television, a television control module, a laptop computer, a mobile device (such as a cellular telephone), etc. However, in some implementations at least some blocks of the method 800 may be performed by one or more devices that are configured to implement a cloud-based service, such as one or more servers.

Block 805 involves receiving, by a control system, an observation sequence comprising a plurality of extracted features. Each extracted feature of the plurality of extracted features corresponds to a sequential signal of a sequence of sequential signals. The sequence of sequential signals is a temporal sequence that includes audio signals, which in some instances may include audio signals corresponding to speech. In some alternative examples, the sequence of sequential signals may be a temporal sequence that includes include other types of audio signals. As an alternative to audio signals, the sequence of sequential signals is a spatial sequence that includes handwriting images,

Block 810 involves determining, by the control system, a lattice of posterior possibilities. The lattice includes a possibility of each observation sequence corresponding to one label class of a plurality of label classes. In some examples, the label classes may correspond to the identities of each of a plurality of talkers.

Block 815 involves applying, by the control system, a loss function to the lattice of posterior possibilities according to ground truth values. Applying the loss function involves applying both sequential information and cluster boundary information. According to some examples, the sequential information and/or the cluster boundary information of the cost function may be variable. In some examples, the cluster boundary information may be incomplete cluster boundary information. However, in some alternative examples, the cluster boundary information may be complete cluster boundary information. In some examples, the loss function may combine elements of connectionist temporal classification and cross-entropy loss. Applying the loss function involves determining one or more valid paths between observations in the lattice.

Block 820 involves updating, by the control system, parameters for determining the lattice of posterior possibilities according to losses determined by the loss function. Block 820 involves updating parameters used by the posterior probability generator 204 of Figure 2 according to parameters of the parameter update block 207.

Block 825 involves continuing to perform blocks 805 through 820 until the control system determines that one or more convergence criteria are met. In some examples, the control system 110 may be configured to determine that convergence has been attained when the training process achieves a state in which the loss determined by the loss function settles to within an error range around a final value, or a state in which the loss determined by the loss function is no longer decreasing, or in which the loss determined by the loss function does not decrease for a predetermined number of steps or epochs.

Performing blocks 805 through 825 provides a trained neural network that is implemented by the control system 110. Method 800 involves performing one or more downstream tasks via the trained neural network.

When the sequence of sequential signals is a sequence of audio signals, the one or more downstream tasks includes acoustic event detection, talker diarization, automatic speech recognition, or combinations thereof.

Method 800 involves determining, by the control system, the plurality of extracted features. The method involves updating, by the control system, parameters for determining the plurality of extracted features according to losses determined by the loss function.

When the sequence of sequential signals is a sequence of handwriting images, the one or more downstream tasks includes handwriting recognition.

Some aspects of present disclosure include a system or device configured (e.g., programmed) to perform the disclosed methods, and a tangible computer readable medium (e.g., a disc) which stores code for implementing the disclosed methods or steps thereof. For example, some disclosed systems can be or include a programmable general purpose processor, digital signal processor, or microprocessor, programmed with software or firmware and/or otherwise configured to perform any of a variety of operations on data, including an embodiment of disclosed methods or steps thereof. Such a general purpose processor may be or include a computer system including an input device, a memory, and a processing subsystem that is programmed (and/or otherwise configured) to perform one or more examples of the disclosed methods (or steps thereof) in response to data asserted thereto.

Some embodiments may be implemented as a configurable (e.g., programmable) digital signal processor (DSP) that is configured (e.g., programmed and otherwise configured) to perform required processing on audio signal(s), including performance of one or more examples of the disclosed methods. Alternatively, embodiments of the disclosed systems (or elements thereof) may be implemented as a general purpose processor (e.g., a personal computer (PC) or other computer system or microprocessor, which may include an input device and a memory) which is programmed with software or firmware and/or otherwise configured to perform any of a variety of operations including one or more examples of the disclosed methods. Alternatively, elements of some embodiments of the inventive system are implemented as a general purpose processor or DSP configured (e.g., programmed) to perform one or more examples of the disclosed methods, and the system also includes other elements (e.g., one or more loudspeakers and/or one or more microphones). A general purpose processor configured to perform one or more examples of the disclosed methods may be coupled to an input device (e.g., a mouse and/or a keyboard), a memory, and a display device.

Another aspect of present disclosure is a computer readable medium (for example, a disc or other tangible storage medium) which stores code for performing (e.g., coder executable to perform) the disclosed methods or steps thereof.

While specific embodiments of the present disclosure and applications of the disclosure have been described herein, it will be apparent to those of ordinary skill in the art that many variations on the embodiments and applications described herein are possible without departing from the scope of protection defined by the claims. It should be understood that while certain forms of the disclosure have been shown and described, the disclosure is not to be limited to the specific embodiments described and shown or the specific methods described.

**Claims**

1. A computer-implemented method, comprising:

   (a) extracting, by a control system, an observation sequence of features from a sequence of sequential signals, wherein each extracted feature corresponds to a respective one of the sequential signals and the sequential signals are, either sequences of audio signals or sequences of handwriting images;
   (b) determining, by the control system, a lattice of posterior probabilities, the lattice including a probability of each of the extracted features to be of a class indicated by one of a plurality of ground truth labels in a ground truth label sequence;
   (c) applying, by the control system, a loss function to the lattice of posterior probabilities according to the ground truth labels, wherein applying the loss function involves applying both sequential information and cluster boundary information from the plurality of extracted features to determine one or more valid paths in the lattice that connect labels of extracted features and comprising one or more pinned labels that are known in advance for one or more corresponding extracted features, wherein a cluster is a group of extracted features having the same label and the cluster boundary information indicates a transition from one class of the extracted features to another class of the extracted features, wherein, in the sequential information, the underlying labels are known to be monotonically aligned with observations;

(d) updating, by the control system, parameters of the posterior probabilities in the lattice according to losses determined by the loss function; and

(e) continuing to perform (a)-(d) until the control system determines that one or more convergence criteria are met,

wherein performing (a)-(e) provides the parameters that define weights of a trained neural network that is implemented by the control system,

further comprising performing one or more downstream tasks via the trained neural network,

wherein, when the sequential signals are sequences of audio signals, the one or more downstream tasks includes at least one of acoustic event detection, talker diarization and automatic speech recognition, and when the sequential signals are sequences of handwriting images, the one or more downstream tasks includes handwriting recognition.

2. The method of claim 1, wherein the cluster boundary information comprises incomplete cluster boundary information.

3. The method of claim 1 or 2, wherein the cluster boundary information comprises complete cluster boundary information.

4. The method of any one of claims 1-3, wherein step (d) further comprises updating, by the control system, parameters for extracting the plurality of extracted features according to the losses determined by the loss function.

5. The method of any one of claims 1-4, wherein the loss function combines elements of connectionist temporal classification and cross-entropy loss.

6. The method of any one of claims 1-5, wherein at least one of the sequential information applied when applying the loss function and the cluster boundary information applied when applying the loss function is variable.

7. A system comprising one or more devices; and one or more computer-readable media having computer-executable instructions stored thereon which, when executed by the one or more devices, cause the one or more devices to perform a method according to any one of claims 1-6.

8. One or more non-transitory computer-readable media having computer executable instructions stored thereon which when executed by one or more devices, cause the one or more devices to perform a method according to any one of claims 1-6.

**Patentansprüche**

1. Computerimplementiertes Verfahren, umfassend:

(a) Extrahieren einer Beobachtungssequenz von Merkmalen aus einer Sequenz sequenzieller Signale durch ein Steuerungssystem, wobei jedes extrahierte Merkmal jeweils einem der sequenziellen Signale entspricht und die sequenziellen Signale entweder Sequenzen von Audiosignalen oder Sequenzen von Handschriftbildern sind;

b) Bestimmen eines Gitters von A-posteriori-Wahrscheinlichkeiten durch das Steuerungssystem, wobei das Gitter die Wahrscheinlichkeit einschließt, dass jedes der extrahierten Merkmale zu einer Klasse gehört, die durch eine von einer Vielzahl von Ground-Truth-Labels in einer Ground-Truth-Labelsequenz angegeben ist;

(c) Anwenden einer Verlustfunktion durch das Steuerungssystem auf das Gitter der A-posteriori-Wahrscheinlichkeiten gemäß den Ground-Truth-Labels, wobei das Anwenden der Verlustfunktion die Verwendung sowohl sequenzieller Informationen als auch von Clustergrenzeninformationen aus der Vielzahl der extrahierten Merkmale einbezieht, um einen oder mehrere gültige Pfade im Gitter zu bestimmen, die Labels extrahierter Merkmale verbinden, und umfassend ein oder mehrere fixierte Labels, die im Voraus für ein oder mehrere entsprechende extrahierte Merkmale bekannt sind, wobei ein Cluster eine Gruppe extrahierter Merkmale mit demselben Label ist und die Clustergrenzeninformationen einen Übergang von einer Klasse der extrahierten Merkmale zu einer anderen Klasse der extrahierten Merkmale anzeigen, wobei in den sequenziellen Informationen bekannt ist, dass die zugrunde liegenden Labels monoton mit den Beobachtungen ausgerichtet sind;

14

(d) Aktualisieren von Parametern der A-posteriori-Wahrscheinlichkeiten im Gitter durch das Steuerungssystem gemäß den durch die Verlustfunktion bestimmten Verlusten; und
(e) Fortsetzen der Durchführung von (a)-(d), bis das Steuerungssystem bestimmt, dass ein oder mehrere Konvergenzkriterien erfüllt sind,

wobei das Durchführen von (a)-(e) die Parameter bereitstellt, die Gewichte eines trainierten neuronalen Netzes definieren, das vom Steuerungssystem implementiert wird,
ferner umfassend das Durchführen einer oder mehrerer nachgelagerter Aufgaben mithilfe des trainierten neuronalen Netzes,
wobei, wenn es sich bei den sequenziellen Signalen um Sequenzen von Audiosignalen handelt, die eine oder mehrere nachgelagerte Aufgaben mindestens eine von akustische Ereigniserkennung, Sprecherdiarisierung und automatische Spracherkennung einschließen; und wenn es sich bei den sequenziellen Signalen um Sequenzen von Handschriftbildern handelt, die eine oder mehrere nachgelagerte Aufgaben die Handschrifterkennung einschließen.

2. Verfahren nach Anspruch 1, wobei die Clustergrenzeninformationen unvollständige Clustergrenzeninformationen umfassen.

3. Verfahren nach Anspruch 1 oder 2, wobei die Clustergrenzeninformationen vollständige Clustergrenzeninformationen umfassen.

4. Verfahren nach einem der Ansprüche 1-3, wobei Schritt (d) ferner das Aktualisieren von Parametern zur Extraktion der Vielzahl extrahierter Merkmale durch das Steuerungssystem gemäß den durch die Verlustfunktion bestimmten Verlusten umfasst.

5. Verfahren nach einem der Ansprüche 1-4, wobei die Verlustfunktion Elemente der konnektionistischen temporalen Klassifizierung und des Kreuzentropieverlusts kombiniert.

6. Verfahren nach einem der Ansprüche 1-5, wobei mindestens eine der sequenziellen Informationen, die bei der Anwendung der Verlustfunktion verwendet werden, und die Clustergrenzeninformationen, die bei der Anwendung der Verlustfunktion verwendet werden, variabel sind.

7. System, umfassend eine oder mehrere Vorrichtungen; und ein oder mehrere computerlesbare Medien, auf denen computerausführbare Anweisungen gespeichert sind, die, wenn sie von der einen oder den mehreren Vorrichtungen ausgeführt werden, die eine oder die mehrere Vorrichtungen veranlassen, ein Verfahren nach einem der Ansprüche 1-6 durchzuführen.

8. Ein oder mehrere nichtflüchtige computerlesbare Medien, auf denen computerausführbare Anweisungen gespeichert sind, die, wenn sie von einer oder mehreren Vorrichtungen ausgeführt werden, die eine oder die mehrere Vorrichtungen veranlassen, ein Verfahren nach einem der Ansprüche 1-6 durchzuführen.

**Revendications**

1. Procédé mis en œuvre par ordinateur, comprenant :

(a) l'extraction, par un système de commande, d'une séquence d'observation de caractéristiques à partir d'une séquence de signaux séquentiels, dans lequel chaque caractéristique extraite correspond à un signal respectif des signaux séquentiels et les signaux séquentiels sont soit des séquences de signaux audio, soit des séquences d'images d'écriture manuscrite ;
(b) la détermination, par le système de commande, d'un réseau de probabilités postérieures, le réseau incluant une probabilité que chacune des caractéristiques extraites soit d'une classe indiquée par l'une d'une pluralité d'étiquettes de réalité de terrain dans une séquence d'étiquettes de réalité de terrain ;
(c) l'application, par le système de commande, d'une fonction de perte au réseau de probabilités postérieures en fonction des étiquettes de réalité de terrain, dans lequel l'application de la fonction de perte implique l'application à la fois d'informations séquentielles et d'informations de limites de cluster provenant de la pluralité de caractéristiques extraites pour déterminer un ou plusieurs chemins valides dans le réseau qui relient des étiquettes de caractéristiques extraites et comprenant une ou plusieurs étiquettes épinglées qui sont connues à l'avance pour une ou plusieurs caractéristiques extraites correspondantes, dans lequel un cluster est un groupe de caractéristiques extraites présentant la même étiquette et les informations de limites de cluster indiquent une transition d'une classe des caractéristiques extraites à une autre classe des caractéristiques extraites, dans lequel, dans les informations séquentielles, les étiquettes sous-jacentes sont connues pour être alignées de manière monotone avec des observations ;

(d) la mise à jour, par le système de commande, de paramètres des probabilités postérieures dans le réseau en fonction de pertes déterminées par la fonction de perte ; et

(e) la répétition de l'exécution des étapes (a)-(d) jusqu'à ce que le système de commande détermine qu'un ou plusieurs critères de convergence sont satisfaits,

dans lequel l'exécution des étapes (a)-(e) fournit les paramètres qui définissent des poids d'un réseau neuronal entraîné mis en œuvre par le système de commande,

comprenant en outre l'exécution d'une ou plusieurs tâches en aval via le réseau neuronal entraîné,

dans lequel, lorsque les signaux séquentiels sont des séquences de signaux audio, les une ou plusieurs tâches en aval incluent au moins une des actions suivantes : détection d'événements acoustiques, segmentation et regroupement des locuteurs et reconnaissance vocale automatique ; et lorsque les signaux séquentiels sont des séquences d'images d'écriture manuscrite, les une ou plusieurs tâches en aval incluent la reconnaissance de l'écriture manuscrite.

2. Procédé selon la revendication 1, dans lequel les informations de limites du cluster comprennent des informations de limites du cluster incomplètes.

3. Procédé selon la revendication 1 ou 2, dans lequel les informations de limites de cluster comprennent des informations de limites de cluster complètes.

4. Procédé selon l'une quelconque des revendications 1-3, dans lequel l'étape (d) comprend en outre la mise à jour, par le système de commande, de paramètres pour l'extraction de la pluralité de caractéristiques extraites en fonction des pertes déterminées par la fonction de perte.

5. Procédé selon l'une quelconque des revendications 1-4, dans lequel la fonction de perte combine des éléments de classification temporelle connexionniste et de perte d'entropie croisée.

6. Procédé selon l'une quelconque des revendications 1-5, dans lequel au moins l'une parmi les informations séquentielles appliquées lors de l'application de la fonction de perte et les informations de limites de cluster appliquées lors de l'application de la fonction de perte est variable.

7. Système comprenant un ou plusieurs dispositifs; et un ou plusieurs supports lisibles par ordinateur sur lesquels sont stockées des instructions exécutables par ordinateur qui, lorsqu'elles sont exécutées par les un ou plusieurs dispositifs, amènent les un ou plusieurs dispositifs à exécuter un procédé selon l'une quelconque des revendications 1-6.

8. Un ou plusieurs supports non transitoires lisibles par ordinateur sur lesquels sont stockées des instructions exécutables par ordinateur qui, lorsqu'elles sont exécutées par un ou plusieurs dispositifs, amènent les un ou plusieurs dispositifs à exécuter un procédé selon l'une quelconque des revendications 1-6.

100

105

Interface System

110

Control System

115

Memory System

120

Microphone System

125

Loudspeaker System

130

Sensor System

135

Display System

*Figure 1A*

*Figure 1B*

EP 4 577 953 B1

110

206

LOSS
CALCULATOR

208

GROUND TRUTH
LABEL SEQUENCE

LATTICE  205

207

PARAMETER
UPDATE BLOCK

POSTERIOR
PROBABILITY
GENERATOR

204

OBSERVATION SEQUENCE

203

⬚ ⬚ ⬚ ⬚ ∘ ∘ ∘ ⬚

FEATURE
EXTRACTOR

202

SEQUENTIAL SIGNALS

201

*Figure 2*

303 Ground Truth Sequence  $[L_1, L_2, L_3]$

Cluster boundary 310

305

301D $L_4$

301C $L_3$

301B $L_2$

301A $L_1$

$S_1$  $S_2$  $S_3$  $S_4$  $S_5$  $S_N$

302A  302B  302C  302D  302E  302N

○ Normal State

● Pinned State

→ Unique Valid Path

-→ Multiple Valid Paths

EP 4 577 953 B1

*Figure 3*

**Figure 4**

AUDIO SEGMENT INSTANCE OF 201
503

WAVEFORM

Figure 5A

spk_684 SCORE 505A   spk_379 SCORE 505B   spk_167 SCORE 505c   CE VECTORS   spk_1195 SCORE 505D   spk_1195 SCORE 505E   SOFTMAX SCORE WHEN TRAINED WITH CE 502

Figure 5B

spk_684 SCORE 504A   spk_379 SCORE 504B   spk_167 SCORE 504C   CTC VECTORS   spk_1195 SCORE 504D   spk_527 SCORE 504E   SOFTMAX SCORE WHEN TRAINED WITH CTC 501

Figure 5C

EP 4 577 953 B1

Figure 6A

ALIGNMENT INFORMATION 610A

ALIGNMENT INFORMATION 610B

WAVEFORM

603A

SCHEMATIC DIAGRAM WHEN spk_684 AND spk_167 ARE KNOWN

Figure 6B

WAVEFORM

603B

TIME (samples)

602

spk_527
spk_1195
spk_167
spk_379
spk_684

605B

SCHEMATIC DIAGRAM WHEN NO PRIOR ALIGNMENT INFORMATION

EP 4 577 953 B1

*Figure 7*

Receiving, by a control system, an observation sequence comprising a plurality of extracted features, each extracted feature of the plurality of extracted features corresponding to a sequential signal of a sequence of sequential signals — 805

Determining, by the control system, a lattice of posterior possibilities, the lattice including a possibility of each observation sequence corresponding to one label class of a plurality of label classes — 810

Applying, by the control system, a loss function to the lattice of posterior possibilities according to ground truth values, wherein applying the loss function involves applying both sequential information and cluster boundary information — 815

Updating, by the control system, parameters for determining the lattice of posterior possibilities according to losses determined by the loss function — 820

Continuing to perform 805–825 until the control system determines that one or more convergence criteria are met — 825

800

*Figure 8*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LI** ; **WANG**. Reinterpreting CTC training as iterative fitting. *arXiv:1904.10619v2*, 07 July 2020
- **KINNUNEN** ; **TOMI** ; **HAIZHOU LI**. An overview of text-independent speaker recognition: From features to supervectors. *Speech communication*, 2010, vol. 52 (1), 12-40

- **DEHAK** ; **NAJIM et al.** Front-end factor analysis for speaker verification.. *In IEEE Transactions on Audio, Speech, and Language Processing*, 2010, vol. 19 (4), 788-798
- X-vectors: Robust dnn embeddings for speaker recognition. **SNYDER** ; **DAVID et al.** 2018 IEEE international conference on acoustics, speech and signal processing (ICASSP). IEEE, 2018, 5329-5333